# EUROPEAN PATENT SPECIFICATION

(11) **EP 2 372 808 B1**
(45) Date of publication and mention of the grant of the patent: **04.03.2015**
(21) Application number: 10169767.0
(22) Date of filing: 16.07.2010
(51) Int. Cl.: H01M 2/04, H01M 2/30, H01M 2/34, H01M 6/50, H01M 10/02, H01M 10/052, H01M 10/0585, H01M 10/0587

(54) **Secondary battery having a fuse**
Sekundärbatterie mit einer Sicherung
Batterie secondaire dotée d'un fusible

(30) Priority: 30.03.2010 US 319110 P
(43) Date of publication of application: 05.10.2011
(73) Proprietor: Samsung SDI Co., Ltd., Gyeonggi-do (KR); Robert Bosch GmbH, 70442 Stuttgart (DE)
(72) Inventor: Byun, Sang-Won, Gyeonggi-do (KR); Kim, Yong-Sam, Gyeonggi-do (KR)
(74) Representative: Gulde & Partner

(56) References cited:
- EP-A1- 1 482 577
- EP-A1- 2 348 558
- US-A1- 2004 166 405
- US-A1- 2004 170 887

## Description

### Field of the Invention

One or more embodiments of the present invention relate to a secondary battery, and more particularly, to a secondary battery protected by operating a fuse when an overcurrent flows due to overcharging or an abnormal phenomenon.

### Description of Related Art

Unlike primary batteries that are not rechargeable, secondary batteries are rechargeable batteries. Secondary batteries are broadly used in high-tech electronic devices such as cellular phones, notebook computers and camcorders and also are used in vehicles.

A secondary battery includes an electrode assembly and an electrolyte. The electrode assembly includes positive and negative electrode plates and a separator. The electrolyte includes lithium (Li) ions in many cases. The positive and negative electrode plates of the electrode assembly may include electrode tabs protruding outward.

The electrode assembly may be accommodated in a case and electrode terminals may be exposed outside the case. The electrode tabs may protrude outside the electrode assembly so as to be electrically connected to the electrode terminals. The case may have a cylindrical shape or a rectangular shape.

Document US 2004/0170887 A1 discloses a secondary battery having a thermal fuse welded to an electrode lead. Document EP 2 348 558 A1 discloses a secondary battery having a fuse element inside its case, the fuse comprising a fuse opening and reinforcement protrusions.

### SUMMARY OF THE INVENTION

One or more embodiments of the present invention include a secondary battery capable of preventing an explosion even when an overcurrent flows due to overcharging or an abnormal phenomenon.

According to one or more embodiments of the present invention, a secondary battery includes: an electrode assembly having a first electrode plate, a second electrode plate, and a separator interposed between the first and the second electrodes plates, and a case for mounting the electrode assembly therein. Further provided is a first electrode terminal, and a fuse portion provided inside the case, wherein the first electrode terminal is electrically connected to the first electrode plate via the fuse portion. The fuse portion is formed by an opening in the connection of the first electrode terminal and the first electrode plate. An insulating unit is provided fully enclosing the fuse portion.

Advantageously, the insulating unit electrically blocks the fuse from its environment.

Preferably, the surface of the insulating unit is larger and covers the surface of the fuse portion.

The insulating unit is provided such that a contact of the fuse portion with an electrolyte inside the case is prevented.

Advantageously, the insulating unit blocks the fuse from contacting the electrolyte and thus prevents explosion of the battery.

The insulating unit may comprise an insulating tape or an insulating molding.

Preferably, the fuse portion is adapted to disconnect the first electrode plate from the first electrode terminal when a current flowing between the first electrode plate and the first electrode terminal exceeds a set threshold value.

A first current collector may be further provided to electrically connect the first electrode plate with the first electrode terminal, wherein the first current collector integrally comprises the fuse portion. Preferably, the fuse portion has a smaller cross-section area than other parts of the first current collector. The fuse portion may have a higher electrical resistance than other parts of the first current collector. The fuse portion may be formed of a material having a lower melting point than other parts of the first current collector.

In one embodiment, the first current collector comprises a first current collecting plate coupled to the first electrode plate, and a first lead member coupled to the first electrode terminal and the current collecting plate, the first lead member comprising the fuse portion.

In another embodiment, the first lead member comprises a first terminal lead unit coupled to the first electrode terminal, and a current collecting lead unit bent from the first terminal lead unit and coupled the current collecting plate, wherein the first terminal lead unit comprises the fuse portion, or the current collecting lead unit comprises the fuse portion.

The secondary battery may further comprise a second electrode terminal electrically connected to the second electrode plate, a second current collector electrically coupled between the second electrode plate and the second electrode terminal, wherein the first electrode plate is a positive electrode plate and the first current collector is a positive current collector, and the second electrode plate is a negative electrode plate and the second current collector is a negative current collector.

The first terminal may be a cap plate, or the case of the battery, or an external terminal protruding through a cap plate.

A secondary battery according to one or more embodiments of the present invention may prevent an explosion even when an overcurrent flows due to overcharging or an abnormal phenomenon.

### BRIEF DESCRIPTION OF THE DRAWINGS

FIG. 1 is a perspective view of a secondary battery according to an embodiment of the present invention.
FIG. 2 is a cross-sectional view taken along a line II-II of the secondary battery illustrated in FIG. 1.
FIG. 3 is a partial exploded perspective view showing that a lead member including a current collecting lead unit in which a fuse is formed is separated from an electrode assembly in the secondary battery illustrated in FIG. 1.
FIG. 4 is a cross-sectional view of a secondary battery according to another embodiment of the present invention.
FIG. 5 is a partial exploded perspective view showing that a lead member including a terminal lead unit in which a fuse is formed is separated from an electrode assembly in the secondary battery illustrated in FIG. 4.
FIG. 6 is a drawing of a secondary battery corresponding to to the embodiment of Fig. 2 but in which the first lead member contacts the cap plate directly.
FIG. 7 is a drawing of a secondary battery corresponding to the embodiment of Fig. 4 but in which the first lead member contacts the cap plate directly.

### DETAILED DESCRIPTION OF THE INVENTION

Reference will now be made in detail to embodiments, examples of which are illustrated in the accompanying drawings.

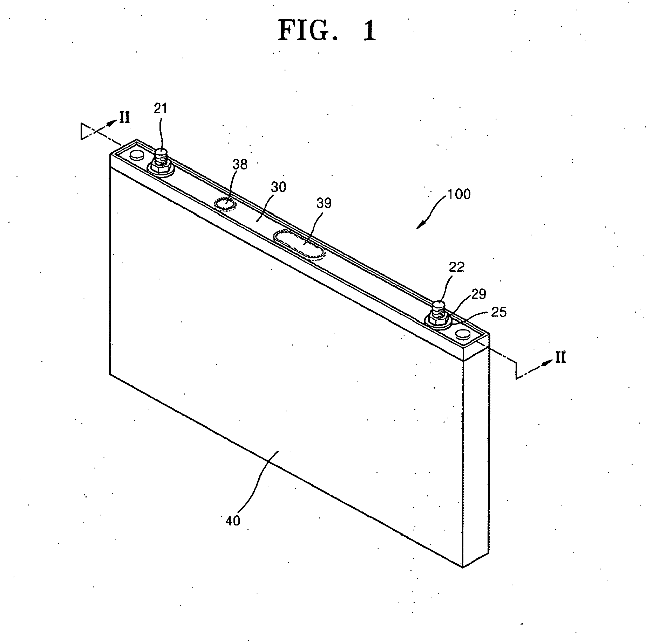

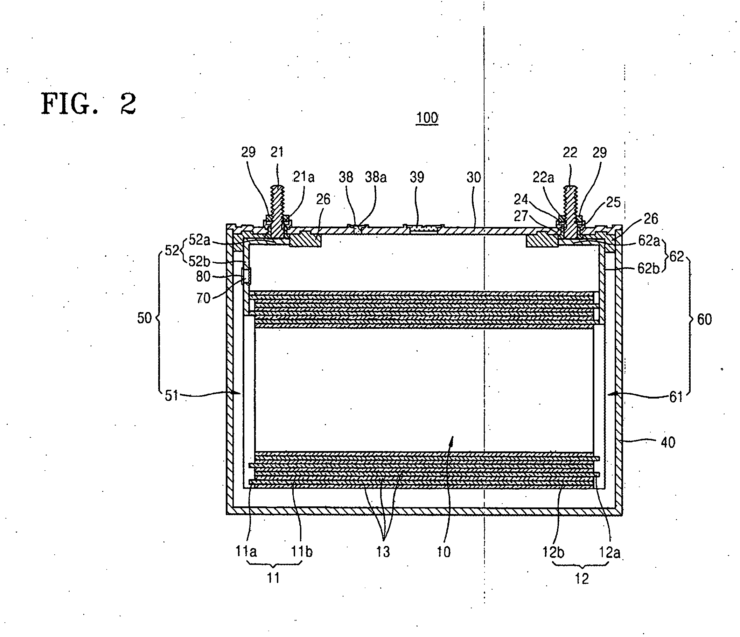

FIG. 1 is a perspective view of a secondary battery 100 according to an embodiment of the present invention. FIG. 2 is a cross-sectional view taken along a line II-II of the secondary battery 100 illustrated in FIG. 1.

Referring to FIGS. 1 and 2, the secondary battery 100 includes an electrode assembly 10; first and second electrode terminals 21 and 22; a cap plate 30; a case 40; first and second current collectors 50 and 60; a fuse 70; and an insulating unit 80. Here, it is exemplarily but not restrictingly assumed that the secondary battery 100 is a rectangular lithium (Li)-ion secondary battery.

The electrode assembly 10 includes a first electrode plate 11, a separator 13 and a second electrode plate 12. The first and second current collectors 50 and 60 are electrically connected to the electrode assembly 10. The first and second current collectors 50 and 60 may be respectively and electrically connected to the first and second electrode plates 11 and 12. The cap plate 30 may be combined with an open surface of the case 40 so as to seal the case 40 in which the electrode assembly 10 is accommodated.

The fuse 70 operates when an overcurrent flows due to overcharging or an abnormal phenomenon, so as to cut off the current flow. The insulating unit 80 wraps and fully encloses the fuse 70 with an insulating material so as to electrically block the fuse 70 from any external contact.

The electrode assembly 10 may be formed by winding the first electrode plate 11, the separator 13 and the second electrode plate 12 in the form of a jelly roll. However, the current embodiment is not limited thereto and the electrode assembly 10 may be formed by alternately stacking the first electrode plate 11, the separator 13 and the second electrode plate 12.

The first current collector 50 may contact the first electrode plate 11 that is exposed at one end of the electrode assembly 10. Also, the second current collector 60 may contact the second electrode plate 12 that is exposed at another end of the electrode assembly 10.

The first electrode terminal 21 may be electrically connected to the first current collector 50 and may be partially exposed outward through the cap plate 30. The second electrode terminal 22 may be electrically connected to the second current collector 60 and may be partially exposed outward through the cap plate 30.

In the secondary battery 100, the first electrode plate 11 may be a positive electrode plate and the second electrode plate 12 may be a negative electrode plate. Also, the first current collector 50 may be a positive electrode current collector and the second current collector 60 may be a negative electrode current collector. Also, the first electrode terminal 21 may be a positive electrode terminal and the second electrode terminal 22 may be a negative electrode terminal.

The electrode assembly 10 is formed by winding the first and second electrode plates 11 and 12, and interposing the separator 13, which is an insulator, between the first and second electrode plates 11 and 12. The case 40 accommodates the electrode assembly 10. The first and second electrode terminals 21 and 22 may respectively be positive and negative electrode terminals. The first and second electrode terminals 21 and 22 may be electrically connected to the first and second electrode plates 11 and 12 of the electrode assembly 10, respectively, so as to be exposed to the outside of the case 40. The cap plate 30 is combined with an opening of the case 40.

The fuse 70 is a device for protecting a circuit by cutting off an overcurrent that is above a preset value. When the overcurrent flows, the overcurrent may be interrupted from flowing through a circuit as the fuse 70 is melted and cut due to heat generated in response to the over current. As such, the stability of a battery may be ensured.

Meanwhile, the first electrode plate 11, the first current collector 50, the first electrode terminal 21, the second electrode terminal 22, the second current collector 60 and the second electrode plate 12 may be electrically connected to form a circuit. Here, if power is input from an external device through the first and second electrode terminal 21 and 22, electricity may be charged between the first and second electrode plates 11 and 12.

In this case, due to overcharging or another abnormal phenomenon, the overcurrent may flow through a circuit from the first electrode plate 11 to the second electrode plate 12. When the overcurrent flows through a circuit, the load on the electrode assembly 10 including the first and second electrode plates 11 and 12 may be excessive and thus an abnormal phenomenon such as an explosion may occur.

However, as the fuse 70 cuts off the overcurrent from flowing through a circuit, the abnormal phenomenon such as an explosion of the secondary battery 100 due to the overcurrent may be prevented. As such, the stability and reliability of the secondary battery 100 against an abnormal phenomenon due to the overcurrent may be ensured.

The electrode assembly 10 includes the first and second electrode plates 11 and 12, and the separator 13. In this case, the first and second electrode plates 11 and 12, and the separator 13 that is an insulator interposed between the first and second electrode plates 11 and 12 are wound to form the electrode assembly 10.

The first and second electrode plates 11 and 12 may respectively include first and second uncoated parts 11 a and 12a and first and second coated parts 11 b and 12b. The first and second uncoated parts 11 a and 12a are regions where an active material is not coated on a current collector formed of metal foil. The first and second coated parts 11 b and 12b are regions where an active material is coated on a current collector formed of metal foil. The first and second uncoated parts 11 a and 12a may respectively be positive and negative electrode uncoated parts, and the first and second coated parts 11 band 12b may respectively be positive and negative electrode coated parts.

The first uncoated part 11 a is formed at a side end of the first electrode plate 11 in a lengthwise direction of the first electrode plate 11. The second uncoated part 12a is formed at another side end of the second electrode plate 12 in a lengthwise direction of the second electrode plate 12.

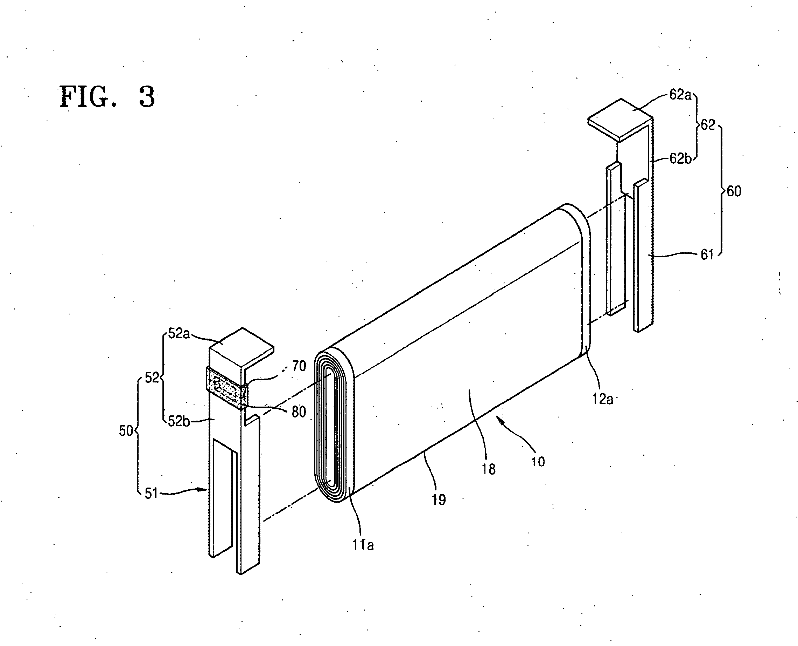

Meanwhile, the electrode assembly 10 may be formed by circularly winding and pressing the first and second electrode plates 11 and 12, and the separator 13. In this case, the electrode assembly 10 may be pressed in the form of a plate so as to form planar parts 18 and curved parts 19 as illustrated in FIG. 3.

The planar parts 18 are portions where the outer circumference of the electrode assembly 10 is planar when the first and second electrode plates 11 and 12, and the separator 13 are wound and pressed in the form of a plate. The curved parts 19 are portions where the outer circumference of the electrode assembly 10 is curved at two ends of the planar parts 18.

The case 40 may have a shape of a rectangular can of which one surface is open. Through the open surface of the case 40, the electrode assembly 10 may be accommodated in the case 40 together with an electrolyte. The cap plate 30 exposes the first and second electrode terminals 21 and 22 and covers the case 40. The boundary between the case 40 and the cap plate 30 may be laser-welded such that the case 40 in which the electrode assembly 10 is accommodated together with the electrolyte may be sealed.

The cap plate 30 may be a thin plate. An electrolyte inlet 38a through which the electrolyte is injected may be formed in the cap plate 30. After the electrolyte is injected through the electrolyte inlet 38a, a sealing plug 38 may fit in the electrolyte inlet 38a. Also, a vent member 39 in which grooves are formed may be formed in the cap plate 30 so as to be broken according to a set internal pressure.

First and second terminal holes 21 a and 22a may be formed in the cap plate 30. The first and second terminal holes 21 a and 22a may respectively be positive and negative electrode terminal holes. The first electrode terminal 21 may be exposed through the first terminal hole 21 a and the second electrode terminal 22 may be exposed through the second terminal hole 22a.

Upper and lower gaskets 25 and 27 may be respectively interposed between the cap plate 30 and the first and second electrode terminals 21 and 22 so as to insulate the cap plate 30 from the first and second electrode terminals 21 and 22.

The lower gaskets 27 fit in the first and second terminal holes 21 a and 22a under the cap plate 30 and the upper gaskets 25 fit in the first and second terminal holes 21 a and 22a on the cap plate 30. Washers 24 for buffering a combining force are formed on the upper gaskets 25. Threads may be formed on the first and second electrode terminals 21 and 22 and may be combined with nuts 29. The nuts 29 support the first and second electrode terminals 21 and 22 on the case 40.

However, the current embodiment is not limited thereto and the first and second electrode terminals 21 and 22 may be formed in the form of rivets. In this case, the first and second electrode terminals 21 and 22 may be fixed to the cap plate 30 by protruding portions of the first and second electrode terminals 21 and 22 out of the case 40 through the first and second terminal holes 21a and 22a, fitting the upper gaskets 25 between the first and second terminal holes 21 a and 22a and the protruding portions of the first and second electrode terminals 21 and 22, and pressing and spreading the protruding portions of the first and second electrode terminals 21 and 22.

The first current collector 50 includes a first current collecting plate 51 and a first lead member 52. The second current collector 60 includes a second current collecting plate 61 and a second lead member 62. Here, the first and second current collecting plates 51 and 61 may respectively be positive and negative electrode current collecting plates, and the first and second lead members 52 and 62 may respectively be positive and negative electrode lead members.

The first current collecting plate 51 may be bonded to the first uncoated part 11 a of the electrode assembly 10 by using a welding method. The first current collecting plate 51 is electrically connected to the first electrode terminal 21 via the first lead member 52. As such, the first electrode terminal 21 is connected to the first electrode plate 11 of the electrode assembly 10 via the first lead member 52 and the first current collecting plate 51.

Also, the second current collecting plate 61 may be bonded to the second uncoated part 12a of the electrode assembly 10 by using a welding method. The second current collecting plate 61 is electrically connected to the second electrode terminal 22 via the second lead member 62. As such, the second electrode terminal 22 is connected to the second electrode plate 12 of the electrode assembly 10 via the second lead member 62 and the second current collecting plate 61.

Insulating members 26 are formed between the cap plate 30 and the first and second lead members 52 and 62. The first and second lead members 52 and 62 respectively include first and second terminal lead units 52a and 62a, and first and second current collecting lead units 52b and 62b. The first and second terminal lead units 52a and 62a are bonded and electrically connected to the first and second electrode terminals 21 and 22. The first and second current collecting plates 51 and 61 are bonded and electrically connected to the first and second current collecting lead units 52b and 62b.

According to another embodiment of the present invention, with respect to one of the first and second electrode terminals 21 and 22, the upper gasket 25, the insulating member 26 and the lower gasket 27 for electrically separating the first electrode plate 11 or the second electrode plate 12 from the cap plate 30 may not be formed. In this case, the cap plate 30' and/or case 40 may be the first electrode terminal or the second electrode terminal.

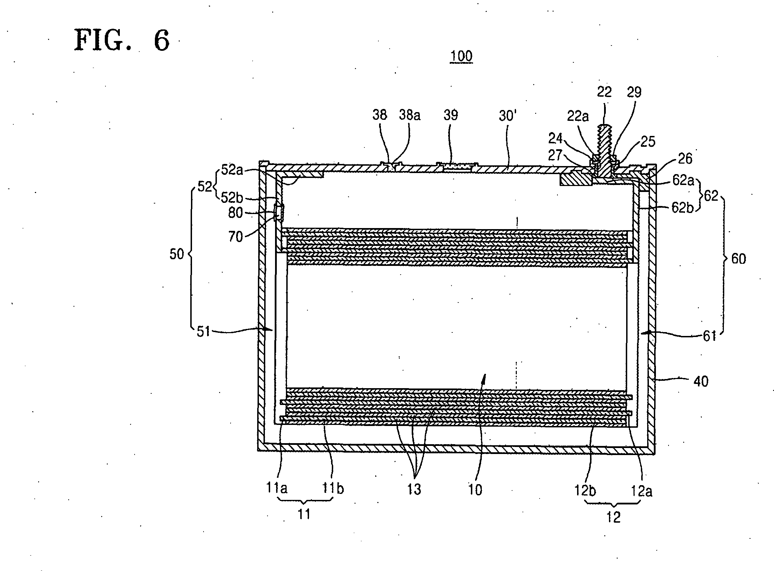

For example, the upper gasket 25 and the lower gasket 27 may not be formed between the cap plate 30' and the first lead member 52 as shown in figure 6. In this case, the first lead member 52 contacts the cap plate 30' directly. The structure and placement of the fuse 70 and the insulating unit 80 is the same as the one in Fig. 2, therefore further description is avoided here and one is rather referred to the description of Fig. 2.

Thus the first electrode terminal 21 may directly contact the cap plate 30 through the first terminal hole 21 a without the upper gasket 25 and the lower gasket 27. Also, the first lead member 52 may directly contact the cap plate 30. In this case, the cap plate 30 and the case 40 have the same polarity as the first electrode terminal 21.

The secondary battery 100 may be a Li-ion secondary battery. However, the current embodiment is not limited thereto and, in addition to the Li-ion secondary battery, the secondary battery 100 may be various other type secondary batteries such as a nickel (Ni)-cadmium (Cd) secondary battery, a nickel-hydrogen (H) secondary battery and a Li secondary battery.

The secondary battery 100 may be a rectangular battery as illustrated in FIGS. 1 and 2. However, the current embodiment is not limited thereto and the secondary battery 100 may be various other type batteries such as a cylindrical battery and a pouch battery.

The first electrode plate 11, the first current collecting plate 51 and the first lead member 52 which are electrically connected to each other may be formed of the same material, for example, aluminum (Al). Also, the second electrode plate 12, the second current collecting plate 61 and the second lead member 62, which are electrically connected to each other may be formed of the same material, for example, copper (Cu).

The fuse 70 may be formed in the first and second current collectors 50 and 60. In more detail, the fuse 70 may be formed by making a portion of the first and second current collectors 50 and 60 thinner than the other portions. In this case, if an overcurrent flows through the first and second current collectors 50 and 60, the resistance of the fuse 70 may be increased in comparison to the other portions so as to increase Joule heat and thus the fuse 70 may be melted and cut due to the heat.

As the fuse 70 may be formed in one of the first and second current collectors 50 and 60 instead of being formed as an additional element, the secondary battery 100 may include the fuse 70 and may have a simple structure. Meanwhile, the fuse 70 may be formed in at least one of the first and second current collectors 50 and 60.

The fuse 70 may be formed in the first lead member 52 of the first current collector 50 or the second lead member 62 of the second current collector 60. For example, the fuse 70 may be formed in the first current collector 50. In this case, the fuse 70 may be formed of Al having a melting point lower than that of Cu and thus the performance of the fuse 70 may be improved.

In this case, the fuse 70 may be formed in the first lead member 52 in order to simplify the structure for forming the fuse 70. Also, the fuse 70 may be formed in one of the first and second current collecting lead units 52b and 62b in order to easily ensure a space for the fuse 70 and the insulating unit 80. FIG. 3 is a partial exploded perspective view showing that the first lead member 52 including the first current collecting lead unit 52b, in which the fuse 70 is formed, is separated from the electrode assembly 10 in the secondary battery 100 illustrated in FIG. 1.

In FIG. 3, the fuse 70 may be formed in the first current collecting lead unit 52b. In this case, the fuse 70 may be formed of Al having a melting point lower than that of Cu and thus the performance of the fuse 70 may be improved. However, the current embodiment is not limited thereto and the fuse 70 may be formed in the second current collecting lead unit 62b.

Meanwhile, the electrolyte having a form of liquid or gel may be filled in the case 40 that accommodates the electrode assembly 10. In this case, the first current collector 50 in which the fuse 70 is formed may contact the electrolyte. Also, when the fuse 70 operates due to an overcurrent, a spark may be generated. As such, the spark may react with the electrolyte and thus an explosion may occur.

Accordingly, the secondary battery 100 may include the insulating unit 80. The insulating unit 80 may prevent the fuse 70 from contacting the electrolyte. For this, the insulating unit 80 may wrap the fuse 70 with an insulating material so as to block the fuse 70 from the electrolyte. The insulating unit 80 may be insulating tape or an insulating molding.

As the insulating tape is taped around the fuse 70 as an example of the insulating unit 80, the fuse 70 may be electrically blocked from external contact and the structure of the secondary battery 100 may be simplified.

Also, the fuse 70 and the insulating unit 80 may be simply formed and the fuse 70 may protect the secondary battery 100 from an abnormal phenomenon such as overcharging. Also, as the insulating unit 80 blocks the fuse 70 from the electrolyte and thus the secondary battery 100 is prevented from exploding or igniting even when the fuse 70 operates, the stability and reliability of the secondary battery 100 may be ensured.

The electrode assembly 10 may be wound and then pressed flat in the form of a plate, and may have an internal space 14 therein. The first and second current collecting plates 51 and 61 may be welded to outside ends of the electrode assembly 10 by pressing the first and second uncoated parts 11 a and 12a.

As such, the first and second current collecting plates 51 and 61 may respectively contact the first and second uncoated parts 11 a and 12a over large areas. Also, the first and second current collecting plates 51 and 61 may be bonded to the outside end of the electrode assembly 10 by using a laser welding method. If the first and second current collecting plates 51 and 61 are bonded by using a laser welding method, the first and second current collecting plates 51 and 61 may have a greater thickness in comparison to an ultrasonic welding method and thus the resistance of the first and second current collecting plates 51 and 61 may be reduced.

As described above, the secondary battery 100 may be prevented from exploding even when the overcurrent flows due to overcharge or an abnormal phenomenon.

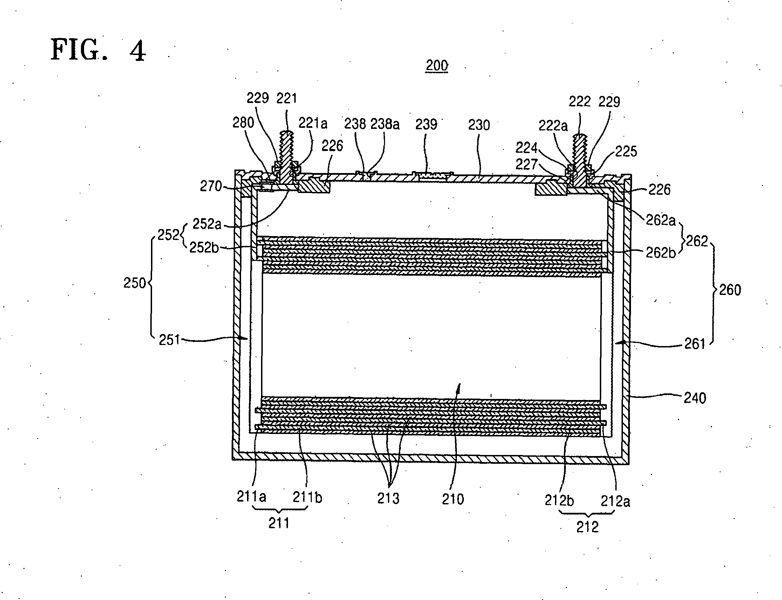

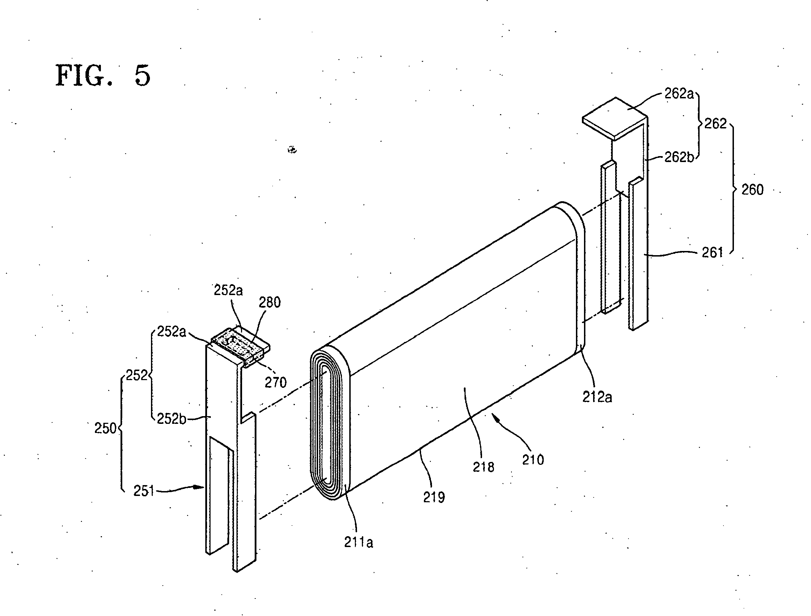

FIG. 4 is a cross-sectional view of a secondary battery 200 according to another embodiment of the present invention. FIG. 5 is a partial exploded perspective view showing that a first lead member 252 including a first terminal lead unit 252a, in which a fuse 270 is formed, is separated from an electrode assembly 210 in the secondary battery 200 illustrated in FIG. 4.

When compared to the secondary battery 100 illustrated in FIG. 2, in the secondary battery 200, the fuse 270 is formed in the first terminal lead unit 252a. Repeated descriptions of the secondary batteries 100 and 200 will not be provided here.

Referring to FIGS. 4 and 5, the secondary battery 200 includes the electrode assembly 210; first and second electrode terminals 221 and 222; a cap plate 230; a case 240; first and second current collectors 250 and 260; the fuse 270; and an insulating unit 280.

The electrode assembly 210 is formed by winding first and second electrode plates 211 and 212 that may respectively be positive and negative electrode plates, and a separator 213 that is an insulator interposed between the first and second electrode plates 211 and 212. The case 240 accommodates the electrode assembly 210. The first and second electrode terminals 221 and 222 may respectively be positive and negative electrode terminals.

The first and second electrode terminals 221 and 222 may be respectively and electrically connected to the first and second electrode plates 211 and 212 of the electrode assembly 210 so as to be exposed outside the case 240. The cap plate 230 is combined with an opening of the case 240. The first and second current collectors 250 and 260 may respectively be positive and negative electrode current collectors that are electrically connected to the first and second electrode plates 211 and 212.

The fuse 270 operates when an overcurrent flows due to overcharging or an abnormal phenomenon, so as to cut off the current flow. The insulating unit 280 wraps the fuse 270 with an insulating material so as to electrically block the fuse 270 from any external contact.

The first electrode plate 211 includes a first uncoated part 211 a and a first coated part 211 b. The second electrode plate 212 includes a second uncoated part 212a and a second coated part 212b. The first and second uncoated parts 211 a and 212a may respectively be positive and negative electrode uncoated parts, and the first and second coated parts 211 b and 212b may respectively be positive and negative electrode coated parts. The first electrode terminal 221 may be exposed through a first terminal hole 221 a that is a positive electrode terminal hole, and the second electrode terminal 222 may be exposed through a second terminal hole 222a that is a negative electrode terminal hole.

An electrolyte inlet 238a may be formed in the cap plate 230, a sealing plug 238 may fit in the electrolyte inlet 238a, and a vent member 239 may also be formed in the cap plate 230. Upper and lower gaskets 225 and 227 may be respectively interposed between the cap plate 230 and the first and second electrode terminals 221 and 222 so as to insulate the cap plate 230 from the first and second electrode terminals 221 and 222. Washers 224 for buffering a combining force are formed on the upper gaskets 225. The first and second electrode terminals 221 and 222 may be combined with nuts 229. Alternatively, the first and second electrode terminals 221 and 222 may be formed in the form of rivets.

First and second current collecting plates 251 and 261 may be respectively bonded to the first and second uncoated parts 211 a and 212a of the electrode assembly 210 by using a welding method. The first and second current collecting plates 251 and 261 are respectively and electrically connected to the first and second electrode terminal 221 and 222 via first and second lead members 252 and 262.

Insulating members 226 are formed between the cap plate 230 and the first and second lead members 252 and 262. The first and second lead members 252 and 262 respectively include first and second terminal lead units 252a and 262a, and first and second current collecting lead units 252b and 262b. The first and second terminal lead units 252a and 262a are bonded and electrically connected to the first and second electrode terminals 221 and 222. The first and second current collecting lead units 252b and 262b are bonded and electrically connected to the first and second current collecting plates 251 and 261.

The first current collector 250 includes the first current collecting plate 251 and the first lead member 252, and the second current collector 260 includes the second current collecting plate 261 and the second lead member 262. The first and second current collecting plates 251 and 261 may respectively be positive and negative electrode current collecting plates, and the first and second lead members 252 and 262 may respectively be positive and negative electrode lead members.

The first current collecting plate 251 may be bonded to the first uncoated part 211 a of the electrode assembly 210 by using a welding method. The first current collecting plate 251 is electrically connected to the first electrode terminal 221 via the first lead member 252. As such, the first electrode terminal 221 is connected to the first electrode plate 211 of the electrode assembly 210 via the first lead member 252 and the first current collecting plate 251.

Also, the second current collecting plate 261 may be bonded to the second uncoated part 212a of the electrode assembly 210 by using a welding method. The second current collecting plate 261 is electrically connected to the second electrode terminal 222 via the second lead member 262. As such, the second electrode terminal 222 is connected to the second electrode plate 212 of the electrode assembly 210 via the second lead member 262 and the second current collecting plate 261.

According to another embodiment of the present invention, with respect to one of the first and second electrode terminals 221 and 222, the upper gasket 225, the insulating member 226 and the lower gasket 227 for electrically separating the first electrode plate 211 or the second electrode plate 212 from the cap plate 230 may not be formed. In this case, the cap plate 230' and/or case 240 may be the first electrode terminal or the second electrode terminal.

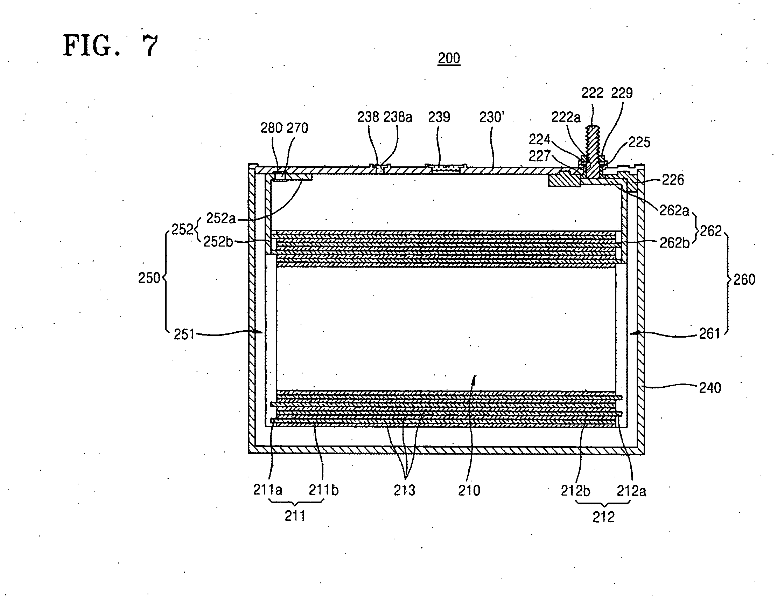

For example, the upper gasket 225 and the lower gasket 227 may not be formed between the cap plate 230' and the first lead member 252 as shown in figure 7. In this case, the first lead member 252 contacts the cap plate 230' directly. The structure and placement of the fuse 270 and the insulating unit 280 is the same as the one in Fig. 4, therefore further description is avoided here and one is rather referred to the description of Fig. 4.

As the fuse 270 may be formed in one of the first and second current collectors 250 and 260 instead of being formed as an additional element, the secondary battery 200 may include the fuse 270 and may have a simple structure. Meanwhile, the fuse 270 may be formed in at least one of the first and second current collectors 250 and 260.

The fuse 270 may be formed in the first lead member 252 of the first current collector 250 or the second lead member 262 of the second current collector 260. For example, the fuse 270 may be formed in the first current collector 250. In this case, the fuse 270 may be formed of Al having a melting point lower than that of Cu and thus the performance of the fuse 270 may be increased.

In this case, the fuse 270 may be formed in the first lead member 252 in order to further simplify the structure for forming the fuse 270. Also, the fuse 270 may be formed in one of the first and second terminal lead units 252a and 262a in order to easily ensure a space for the fuse 270 and the insulating unit 280.

In FIG. 5, the fuse 270 may be formed in the first terminal lead unit 252a. In this case, the fuse 70 may be formed of Al having a melting point lower than that of Cu and thus the performance of the fuse 270 may be improved.

Meanwhile, an electrolyte in the form of liquid or gel may be filled in the case 240 that accommodates the electrode assembly 210. In this case, the first current collector 250 in which the fuse 270 is formed may contact the electrolyte. Also, when the fuse 270 operates due to an overcurrent, a spark may be generated. As such, the spark may react with the electrolyte and thus an explosion may occur.

Accordingly, the secondary battery 200 may include the insulating unit 280. The insulating unit 280 may prevent the fuse 270 from contacting the electrolyte. For this, the insulating unit 280 may wrap the fuse 270 with an insulating material so as to block the fuse 270 from the electrolyte. The insulating unit 280 may be insulating tape or an insulating molding.

As the insulating tape is taped around the fuse 270 as an example of the insulating unit 280, the fuse 270 may be electrically blocked from any external contact and the structure of the secondary battery 200 may be simplified.

Also, the fuse 270 and the insulating unit 280 may be simply formed and the fuse 270 may protect the secondary battery 200 from an abnormal phenomenon such as overcharging. Also, as the insulating unit 280 blocks the fuse 270 from the electrolyte and thus the secondary battery 200 is prevented from exploding or igniting even when the fuse 270 operates, the stability and reliability of the secondary battery 200 may be ensured.

As described above, the secondary battery 200 may be prevented from exploding even when an overcurrent flows due to overcharging or an abnormal phenomenon.

It should be understood that the exemplary embodiments described herein should be considered in a descriptive sense only and not for purposes of limitation. Descriptions of features or aspects within each embodiment should typically be considered as available for other similar features or aspects in other embodiments.

## Claims

1. A secondary battery (100, 200) comprising:
an electrode assembly (10) having a first electrode plate (11), a second electrode plate (12), and a separator (13) interposed between the first and the second electrodes plates (11, 12);
a case (40) for mounting the electrode assembly (10) therein;
a first electrode terminal (21, 30), and
a fuse portion (70) provided inside the case (40),
wherein the first electrode terminal (21, 30) is electrically connected to the first electrode plate (11) via the fuse portion (70),
**characterized in that**
the fuse portion (70) is formed by an opening in an electrical connection element between the first electrode terminal (21, 30) and the first electrode plate (11) and an insulating unit (80) fully encloses the fuse portion (70).

2. The secondary battery (100, 200) of claim 1, wherein the surface of the insulating unit (80) is larger than the surface of the fuse portion (70) and covers the surface of the fuse portion (70).

3. The secondary battery (100, 200) of any of the previous claims, wherein the insulating unit (80) is provided such that a contact of the fuse portion (70) with an electrolyte inside the case (40) is prevented.

4. The secondary battery (100, 200) of any of the previous claims, wherein the insulating unit (80) comprises an insulating tape or an insulating molding.

5. The secondary battery (100, 200) of any of the previous claims, wherein the fuse portion (70) is adapted to disconnect the first electrode plate (11) from the first electrode terminal (21, 30) when a current flowing between the first electrode plate (11) and the first electrode terminal (21, 30) exceeds a set threshold value.

6. The secondary battery (100, 200) of any of the previous claims, further comprising a first current collector (50) to electrically connect the first electrode plate (11) with the first electrode terminal (21, 30) wherein the first current collector (50) integrally comprises the fuse portion (70).

7. The secondary battery (100, 200) of claim 6, wherein the fuse portion (70) has a smaller cross-section area than other parts of the first current collector (50).

8. The secondary battery (100, 200) of claim 6 or 7, wherein the fuse portion (70) has a higher electrical resistance than other parts of the first current collector (50).

9. The secondary battery (100, 200) of any of claims 6 to 8, wherein the fuse portion (70) is formed of a material having a lower melting point than other parts of the first current collector (50).

10. The secondary battery (100, 200) of any of claims 6 to 9, wherein the first current collector (50) comprises:
a first current collecting plate (51) coupled to the first electrode plate (11); and
a first lead member (52) coupled to the first electrode terminal (21, 30) and the current collecting plate (51) and comprising the fuse portion (70).

11. The secondary battery (100, 200) of claim 10, wherein the first lead member (252) comprises:
a first terminal lead unit (52a, 252a) coupled to the first electrode terminal (21, 30, 221, 230), and
a current collecting lead unit (52b, 252b) bent from the first terminal lead unit (52a, 252a) and coupled the current collecting plate (51, 251), wherein
the first terminal lead unit (252a) comprises the fuse portion (270), or
the current collecting lead unit (52b) comprises the fuse portion (70).

12. The secondary battery of any of the previous claims, wherein the secondary battery further comprises:
a second electrode terminal (22) electrically connected to the second electrode plate (12),
a second current collector (60) electrically coupled between the second electrode plate (12) and the second electrode terminal (22),
wherein
the first electrode plate (11) is a positive electrode plate and the first current collector (50) is a positive current collector, and
the second electrode plate (12) is a negative electrode plate and the second current collector (60) is a negative current collector.

13. The secondary battery of any of the previous claims 1 to 11, wherein the first terminal is:
a cap plate (30), or
the case (40) of the battery, or
an external terminal (21) protruding through a cap plate (30).

## Patentansprüche

1. Sekundärbatterie (100, 200), umfassend:
eine Elektrodenanordnung (10) mit einer ersten Elektrodenplatte (11), einer zweiten Elektrodenplatte (12) und einem zwischen der ersten und der zweiten Elektrodenplatte (11, 12) angeordneten Separator (13);
ein Gehäuse (40) zum Montieren der Elektrodenanordnung (10) in selbigem;
einen ersten Elektrodenanschluss (21, 30) und
einen im Inneren des Gehäuses (40) vorgesehenen Sicherungsabschnitt (70),
wobei der erste Elektrodenanschluss (21, 30) mit der ersten Elektrodenplatte (11) über den Sicherungsabschnitt (70) elektrisch verbunden ist,
**dadurch gekennzeichnet, dass**
der Sicherungsabschnitt (70) durch eine Öffnung in einem elektrischen Verbindungselement zwischen dem ersten Elektrodenanschluss (21, 30) und der ersten Elektrodenplatte (11) gebildet wird und eine Isoliereinheit (80) den Sicherungsabschnitt (70) vollständig umgibt.

2. Sekundärbatterie (100, 200) nach Anspruch 1, wobei die Oberfläche der Isoliereinheit (80) größer ist als die Oberfläche des Sicherungsabschnitts (70) und die Oberfläche des Sicherungsabschnitts (70) bedeckt.

3. Sekundärbatterie (100, 200) nach einem der vorangehenden Ansprüche, wobei die Isoliereinheit (80) so vorgesehen ist, dass ein Kontakt des Sicherungsabschnitts (70) mit einem Elektrolyt im Inneren des Gehäuses (40) verhindert wird.

4. Sekundärbatterie (100, 200) nach einem der vorangehenden Ansprüche, wobei die Isoliereinheit (80) ein Isolierband oder ein Isolierformstück umfasst.

5. Sekundärbatterie (100, 200) nach einem der vorangehenden Ansprüche, wobei der Sicherungsabschnitt (70) geeignet ist, die erste Elektrodenplatte (11) von dem ersten Elektrodenanschluss (21, 30) zu trennen, wenn ein zwischen der ersten Elektrodenplatte (11) und dem ersten Elektrodenanschluss (21, 30) fließender Strom einen festgelegten Schwellenwert überschreitet.

6. Sekundärbatterie (100, 200) nach einem der vorangehenden Ansprüche, weiterhin umfassend einen ersten Stromkollektor (50) zum elektrischen Verbinden der ersten Elektrodenplatte (11) mit dem ersten Elektrodenanschluss (21, 30), wobei der erste Stromkollektor (50) den Sicherungsabschnitt (70) integral umfasst.

7. Sekundärbatterie (100, 200) nach Anspruch 6, wobei der Sicherungsabschnitt (70) eine kleinere Querschnittsfläche aufweist als andere Teile des ersten Stromkollektors (50).

8. Sekundärbatterie (100, 200) nach Anspruch 6 oder 7, wobei der Sicherungsabschnitt (70) einen größeren elektrischen Widerstand aufweist als andere Teile des ersten Stromkollektors (50).

9. Sekundärbatterie (100, 200) nach Anspruch 6 bis 8, wobei der Sicherungsabschnitt (70) aus einem Material mit einem niedrigeren Schmelzpunkt als andere Teile des ersten Stromkollektors (50) gebildet ist.

10. Sekundärbatterie (100, 200) nach einem der Ansprüche 6 bis 9, wobei der erste Stromkollektor (50) umfasst:
eine an die erste Elektrodenplatte (11) gekoppelte erste Stromkollektorplatte (51); und
ein an den ersten Elektrodenanschluss (21, 30) und die erste Stromkollektorplatte (51) gekoppeltes und den Sicherungsabschnitt (70) umfassendes Führungselement (52).

11. Sekundärbatterie (100, 200) nach Anspruch 10, wobei das erste Führungselement (252) umfasst:
eine an den ersten Elektrodenanschluss (21, 30, 221, 230) gekoppelte erste Anschlussführungseinheit (52a, 252a) und
eine von der ersten Anschlussführungseinheit (52a, 252a) weg gebogene und an die Stromkollektorplatte (51, 251) gekoppelte Stromkollektorführungseinheit (52b, 252b), wobei
die erste Anschlussführungseinheit (252a) den Sicherungsabschnitt (270) umfasst oder
die Stromkollektorführungseinheit (52b) den Sicherungsabschnitt (70) umfasst.

12. Sekundärbatterie nach einem der vorangehenden Ansprüche, wobei die Sekundärbatterie weiterhin umfasst:
einen mit der zweiten Elektrodenplatte (12) elektrisch verbundenen zweiten Elektrodenanschluss (22),
einen zwischen die zweite Elektrodenplatte (12) und den zweiten Elektrodenanschluss (22) elektrisch gekoppelten zweiten Stromkollektor (60),
wobei
die erste Elektrodenplatte (11) eine positive Elektrodenplatte ist und der erste Stromkollektor (50) ein positiver Stromkollektor ist und
die zweite Elektrodenplatte (12) eine negative Elektrodenplatte ist und der zweite Stromkollektor (60) ein negativer Stromkollektor ist.

13. Sekundärbatterie nach einem der vorangehenden Ansprüche 1 bis 11, wobei der erste Anschluss:
eine Deckelplatte (30) oder
das Gehäuse (40) der Batterie oder
ein durch eine Deckelplatte (30) hindurchragender externer Anschluss (21) ist.

## Revendications

1. Batterie secondaire (100, 200) comprenant :
un ensemble d'électrode (10) ayant une première plaque d'électrode (11), une seconde plaque d'électrode (12) et un séparateur (13) intercalé entre les première et seconde plaques d'électrode (11, 12) ;
un boîtier (40) pour monter l'ensemble d'électrode (10) à l'intérieur de ce dernier ;
une première borne d'électrode (21, 30), et
une partie de fusible (70) prévue à l'intérieur du boîtier (40),
dans laquelle la première borne d'électrode (21, 30) est électriquement raccordée à la première plaque d'électrode (11) via la partie de fusible (70),
caractérisée en ce qui :
la partie de fusible (70) est formée par une ouverture dans un élément de raccordement électrique entre la première borne d'électrode (21, 30) et la première plaque d'électrode (11) et une unité isolante (80) entoure complètement la partie de fusible (70).

2. Batterie secondaire (100, 200) selon la revendication 1, dans laquelle la surface de l'unité isolante (80) est supérieure à la surface de la partie de fusible (70) et recouvre la surface de la partie de fusible (70).

3. Batterie secondaire (100, 200) selon l'une quelconque des revendications précédentes, dans laquelle l'unité isolante (80) est prévue de sorte qu'un contact de la partie de fusible (70) avec un électrolyte à l'intérieur du boîtier (40) est empêché.

4. Batterie secondaire (100, 200) selon l'une quelconque des revendications précédentes, dans laquelle l'unité isolante (80) comprend une bande isolante ou un moulage isolant.

5. Batterie secondaire (100, 200) selon l'une quelconque des revendications précédentes, dans laquelle la partie de fusible (70) est adaptée pour déconnecter la première plaque d'électrode (11) de la première borne d'électrode (21, 30) lorsqu'un courant s'écoulant entre la première plaque d'électrode (11) et la première borne d'électrode (21, 30) dépasse une valeur de seuil de consigne.

6. Batterie secondaire (100, 200) selon l'une quelconque des revendications précédentes, comprenant en outre un premier collecteur de courant (50) pour raccorder électriquement la première plaque d'électrode (11) avec la première borne d'électrode (21, 30), dans laquelle le premier collecteur de courant (50) comprend de manière solidaire la partie de fusible (70).

7. Batterie secondaire (100, 200) selon la revendication 6, dans laquelle la partie de fusible (70) a une surface en section transversale inférieure aux autres parties du premier collecteur de courant (50).

8. Batterie secondaire (100, 200) selon la revendication 6 ou 7, dans laquelle la partie de fusible (70) a une résistance électrique supérieure aux autres parties du premier collecteur de courant (50).

9. Batterie secondaire (100, 200) selon l'une quelconque des revendications 6 à 8, dans laquelle la partie de fusible (70) est formée avec un matériau ayant un point de fusion inférieur aux autres parties du premier collecteur de courant (50).

10. Batterie secondaire (100, 200) selon l'une quelconque des revendications 6 à 9, dans laquelle le premier collecteur de courant (50) comprend :
une première plaque de collecte de courant (51) couplée à la première plaque d'électrode (11) ; et
un premier élément de fil (52) couplé à la première borne d'électrode (21, 30) et à la plaque de collecte de courant (51) et comprenant la partie de fusible (70).

11. Batterie secondaire (100, 200) selon la revendication 10, dans laquelle le premier élément de fil (252) comprend :
une première unité de fil de borne (52a, 252a) couplée à la première borne d'électrode (21, 30, 221, 230), et
une unité de fil de collecte de courant (52b, 252b) pliée à partir de la première unité de fil de borne (52a, 252a) et couplée à la plaque de collecte de courant (51, 251),
la première unité de fil de borne (252a) comprenant la partie de fusible (270), ou bien
l'unité de fil de collecte de courant (52b) comprenant la partie de fusible (70).

12. Batterie secondaire selon l'une quelconque des revendications précédentes, la batterie secondaire comprenant en outre :
une seconde borne d'électrode (22) électriquement raccordée à la seconde plaque d'électrode (12),
un second collecteur de courant (60) électriquement couplé entre la seconde plaque d'électrode (12) et la seconde borne d'électrode (22),
dans laquelle :
la première plaque d'électrode (11) est une plaque d'électrode positive et le premier collecteur de courant (50) est un collecteur de courant positif, et
la seconde plaque d'électrode (12) est une plaque d'électrode négative et le second collecteur de courant (60) est un collecteur de courant négatif.

13. Batterie secondaire selon les revendications 1 à 11, dans laquelle la première borne est :
une plaque formant capuchon (30), ou
le boîtier (40) de la batterie, ou bien
une borne externe (21) faisant saillie à travers une plaque formant capuchon (30).
